# EUROPÄISCHE PATENTANMELDUNG

(11) **EP 1 577 809 A1**
(43) Veröffentlichungstag der Anmeldung: **21.09.2005**
(21) Anmeldenummer: 05002576.6
(22) Anmeldetag: 08.02.2005
(51) Int. Cl.: G06F 17/60

(54) **System zum Empfehlen eines Objektes sowie ein geeignetes Verfahren hierfür**

(30) Priorität: 27.02.2004 DE 102004009504
(71) Anmelder: ZANOX.de AG, 10245 Berlin (DE)
(72) Erfinder: Hessler, Thomas, 13053 Berlin (DE)
(74) Vertreter: Kunz, Herbert

(57) **Zusammenfassung**

Beschrieben wird ein Verfahren zum Empfehlen eines Objektes, welches die Schritte wie das Aussuchen eines Objekts auf einer Website des Internets durch einen Nutzer; das Bereitstellen eines Empfehlungsfeldes auf der Website, die dem Objekt zugeordnet ist; das Aktivieren des Empfehlungsfeldes zur Weitergabe von Informationen über das Objekt von dem Nutzer zu einem Adressaten; das Ausführen einer Kaufbestätigung des Adressaten des von dem Nutzer empfohlenen Objekts oder das Mitteilen der Kaufbestätigung an den Nutzer, aufweist.

## Beschreibung

Die vorliegende Erfindung betrifft ein System zum Empfehlen eines Objektes sowie ein geeignetes Verfahren hierfür.

Bislang erfolgte das Empfehlen bzw. Weiterempfehlen durch mündliche oder persönliche Informationsübermittlung über ein bestimmtes Objekt, welches gegebenenfalls für einen Dritten von Interesse sein könnte. Bei der Internetanwendung kann beispielsweise ein Nutzer ein Objekt auffinden, von dem er weiß, dass ein Dritter gegebenenfalls daran Interesse haben könnte. Für eine derartige Empfehlung war es meistens notwendig, dass der Nutzer sich Daten über das Objekt beschaffen musste, und diese Daten entweder mündlich oder fernmündlich weitergeben musste.

Es ist somit eine Aufgabe der vorliegenden Erfindung, ein Verfahren zum Empfehlen eines Objektes bzw. ein System hierfür bereitzustellen, welches die Möglichkeiten zum Empfehlen von Objekten vereinfacht.

Es ist ferner eine weitere Aufgabe der vorliegenden Erfindung, dass der Nutzer, der eine Empfehlung für ein Objekt weitergibt, einen Vorteil davon hat.

Gelöst werden diese Aufgaben verfahrenstechnisch mit den Merkmalen des Anspruchs 1 und systemtechnisch mit den Merkmalen des Anspruchs 12.

Wird anmeldungsgemäß die Empfehlung eines Objektes über die Web-Site im Internet durchgeführt, so ist durch die Bereitstellung eines Empfehlungsfeldes, welches dem Objekt zugeordnet ist, dem Nutzer auf einfache Weise die Möglichkeit zur Weiterempfehlung bereitgestellt. Aufgrund der Aktivierung des Empfehlungsfeldes werden die Informationen über das Objekt von dem Nutzer zu einem Adressaten weitergegeben. Da dies anmeldungsgemäß über das Internet erfolgt, ist zum einen heutzutage der technische Aufwand gering, bzw. die Verbreitungsmöglichkeiten extrem vielfältig. Wird dann anmeldungsgemäß von dem Adressaten des von dem Nutzer empfohlenen Objektes eine Kaufbestätigung ausgeführt, so hat die zu dem Objekt zugeordnete Empfehlung ihr Ziel erreicht. Durch Mitteilen der Kaufbestätigung an den Nutzer kann dann dem Nutzer ein Vorteil, beispielsweise in Form einer Provision, angetragen werden.

Weitere vorteilhafte Ausführungsformen sind Gegenstand der Unteransprüche.

Durch die Weitergabe der Informationen über einen Link-Hinweis an den Adressaten kann auf einfache Weise auf gängige Übertragungsmittel bzw. Kommunikationsmittel zurückgegriffen werden.

Durch die Weitergabe der Informationen über eine persönliche Übermittlung wird zum einen auf herkömmliche Empfehlungsmöglichkeiten zurückgegriffen oder zum anderen neuerdings unter Angabe eines Code-Hinweises auch sicherheitsrelevanten Aspekten Rechnung getragen.

Die Weitergabe der Empfehlung eines Objektes kann vorteilhafter Weise nach Aktivieren des Empfehlungsfeldes über eine Empfehlungsmaske herbeigefügt werden.

Das anmeldungsgemäße System zum Empfehlen eines Objektes kann auch so ausgestaltet sein, dass ein Signalhinweis vergeben wird, wenn beispielsweise der Kaufpreis des empfohlenen Objektes einen vorgegebenen Mindestpreis unterschreitet, so dass der Nutzer die Möglichkeit hat, die Empfehlung erst dann auszusprechen, wenn es gegebenenfalls durch den Adressaten von besonderem Interesse ist oder aber der Adressat nach Erhalt der Empfehlung so lange die Kaufbestätigung zurückhält, bis sich für ihn eine Kaufempfehlung lohnt.

Weitere vorteilhafte Ausgestaltungen der vorliegenden Erfindung sind Gegenstand der weiteren Unteransprüche.

Anhand des Flussdiagramms soll eine Ausführungsform des anmeldungsgemäßen Verfahrens bzw. des anmeldungsgemäßen Systems dargestellt werden.

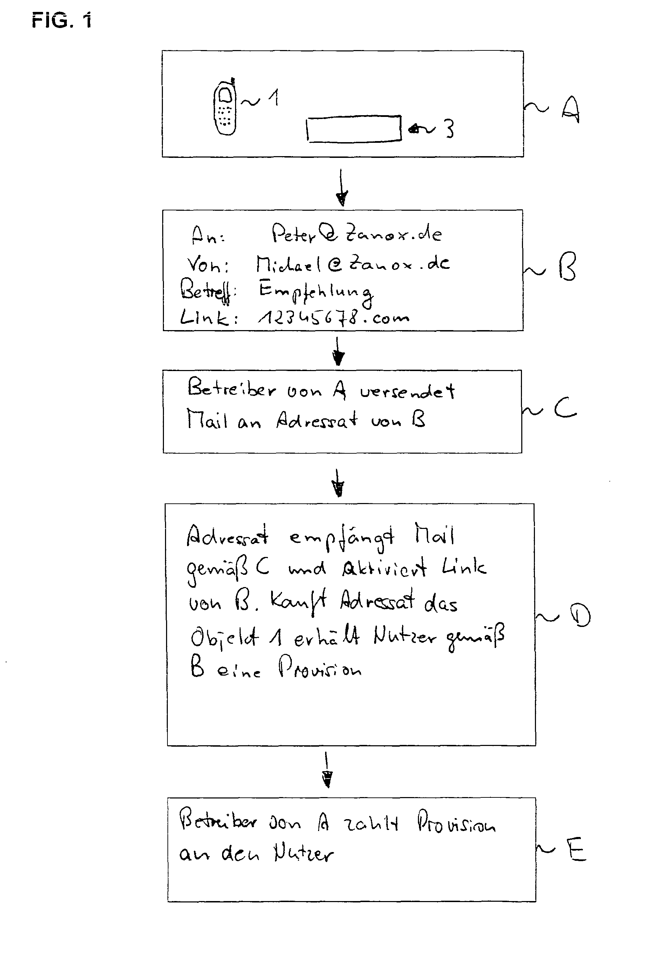

In diesem Flussdiagramm gemäß Fig. 1 wird unter A auf einer Webpage ein Objekt, beispielsweise ein Mobilfunktelefon 1, und ein dem Objekt zugeordnetes Empfehlungsfeld 3 dargestellt, welches aktiviert werden kann. Nach Aktivieren des Empfehlungsfeldes 3 wird unter B beispielsweise über eine e-Mail-Verbindung ein Adressat angeschrieben, und zwar beispielsweise mit dem Link-Hinweis zu dem empfohlenen Objekt. Daraufhin kann dann gemäß C der Betreiber der Webpage die e-Mail an den Adressaten verschicken. Gemäß D erhält der Adressat die e-Mail und kann durch Aktivieren des Link-Hinweises sich das empfohlene Objekt betrachten. Wird das empfohlene Objekt von dem Adressaten erworben, so wird dem Nutzer, der die Webpage betrachtet und die Empfehlung ausgesprochen hat, eine Provisionszahlung zugesprochen. Gemäß E zahlt beispielsweise der Betreiber der Webpage dann dem Nutzer eine Provision.

Mit diesem anmeldungsgemäßen Verfahren bzw. System ist es somit möglich, auch eine Statistik über die am häufigsten empfohlenen Produkte und auch gegebenenfalls gekauften Produkte zu erstellen. Diese Statistik kann dann beispielsweise in Form einer Empfehlungsliste dem Nutzer zur Verfügung gestellt werden.

Auf diese Weise ist es ferner möglich, dass durch ein entsprechendes Zusatzmodul weitere Funktionen beim Empfehlen von Objekten zur Verfügung gestellt werden, wie z. B. erstens Objekte beobachten, die beispielsweise auf einem Merkzettel gespeichert sind. Zweitens können beobachtete Objekte mit einem Datum und einer e-Mail-Erinnerung versehen werden, um beispielsweise besondere Festtage zu berücksichtigen. Drittens kann ein Signalhinweis vergeben werden, der dann ausgelöst wird, wenn ein Objekt einen bestimmten Preis, welcher vorher festgelegt werden kann, unterschreitet.

## Patentansprüche

1. Verfahren zum Empfehlen eines Objektes, welches die Schritte aufweist:
a) Aussuchen eines Objekts auf einer Website des Internets durch einen Nutzer.
b) Bereitstellen eines Empfehlungsfeldes auf der Website, die dem Objekt zugeordnet ist.
c) Aktivieren des Empfehlungsfeldes zur Weitergabe von Informationen über das Objekt von dem Nutzer zu einem Adressaten.
d) Ausführen einer Kaufbestätigung des Adressaten des von dem Nutzer empfohlenen Objekts
e) Mitteilen der Kaufbestätigung an den Nutzer.

2. Verfahren nach Anspruch 1, wobei die Weitergabe der Informationen über einen Link-Hinweis an den Adressaten erfolgt, vorzugsweise mittels einer E-mail, SMS, TV oder multimedial.

3. Verfahren nach einem der Ansprüche 1 oder 2, wobei die Weitergabe der Informationen über eine persönliche Übermittlung erfolgt, vorzugsweise unter Angabe eines Codehinweises.

4. Verfahren nach einem der Ansprüche 1 bis 3, wobei die Weitergabe der Informationen über Printmedien, vorzugsweise Flugblatt oder Aufkleber erfolgt.

5. Verfahren nach einem der Ansprüche 1 bis 4, wobei das Mitteilen der Kaufbestätigung von einem Vermittelungsprovider erfolgt, der die Weitergabe der Informationen über das Objekt initiiert hat.

6. Verfahren nach einem der Ansprüche 1 bis 5, wobei aufgrund des Mitteilens der Kaufbestätigung an den Nutzer auch eine Provisionszahlung, vorzugsweise von dem Vermittelungsprovider, verbunden ist.

7. Verfahren nach einem der Ansprüche 1 bis 6, wobei eine Statistik erstellt wird, die in Relation zu den empfohlenen und/oder gekauften Obkjekten steht.

8. Verfahren nach einem der Ansprüche 1 bis 7, wobei nach Aktivieren des Empfehlungsfeldes eine Empfehlungseingabemaske geöffnet wird.

9. Verfahren nach einem der Ansprüche 1 bis 8, wobei die empfohlenen Objekte, vorzugsweise des Nutzers, gespeichert werden.

10. Verfahren nach einem der Ansprüche 1 bis 9, wobei ein Signalhinweis vergeben wird, wenn der Kaufpreis eines Objekts einen vorgegebenen Mindestpreis unterschreitet.

11. Verfahren nach einem der Ansprüche 1 bis 10, wobei das Objekt ein Produkt und/oder eine Dienstleistung ist.

12. System zum Empfehlen eines Objektes, insbesondere zur Durchführung des Verfahrens nach einem der Ansprüche 1 bis 11, welches aufweist:
a) ein Empfehlungsfeld auf einer Website im Internet, das dem Objekt zugeordnet ist,
b) ein Mittel zum Weitergeben von Informationen über das Objekt von einem Nutzer zu einem Adressaten,
c) ein Mittel zum Ausführen einer Kaufbestätigung an den Nutzer

13. System nach Anspruch 12, wobei die Weitergabe der Informationen über einen Link-Hinweis an den Adressaten erfolgt, vorzugsweise mittels einer E-mail.

14. System nach einem der Ansprüche 12 oder 13, wobei das Mittel zum Ausführen der Kaufbestätigung einen Vermittelungsprovider unfasst, der die Weitergabe der Informationen über das Objekt initiiert hat.

15. System nach einem der Ansprüche 12 bis 14, wobei aufgrund der Mitteilung der Kaufbestätigung an den Nutzer auch eine Provisionszahlung, vorzugsweise von dem Vermittelungsprovider, verbunden ist.

16. System nach einem der Ansprüche 12 bis 15, wobei eine Statistik erstellt wird, die in Relation zu den empfohlenen und/oder gekauften Obkjekten steht.

17. System nach einem der Ansprüche 12 bis 16, wobei nach Aktivieren des Empfehlungsfeldes eine Empfehlungseingabemaske mit Verknüpfung zu einem E-Mail Programm geöffnet wird.

18. System nach einem der Ansprüche 12 bis 17, wobei die empfohlenen Objekte, vorzugsweise des Nutzers, in einer Speichereinheit gespeichert werden.

19. System nach einem der Ansprüche 12 bis 18, wobei ein Signalhinweis vergeben wird, wenn der Kaufpreis eines Objekts einen vorgegebenen Mindestpreis unterschreitet.

20. System nach einem der Ansprüche 12 bis 19, wobei das Objekt ein Produkt und/oder eine Dienstleistung ist.

21. System nach einem der Ansprüche 12 bis 20, wobei die Weitergabe der Informationen über Printmedien, vorzugsweise Flugblatt oder Aufkleber erfolgt.
